# EUROPÄISCHE PATENTANMELDUNG

(11) **EP 1 394 919 A2**
(43) Veröffentlichungstag der Anmeldung: **03.03.2004**
(21) Anmeldenummer: 03090223.3
(22) Anmeldetag: 17.07.2003
(51) Int. Cl.: H02G 5/06

(54) **Scheibenisolator mit einer symmetrischen Aussenkontur**

(30) Priorität: 28.08.2002 DE 10240354
(71) Anmelder: SIEMENS AKTIENGESELLSCHAFT, 80333 München (DE)
(72) Erfinder: Gorablenkow, Jörg, 13591 Berlin (DE); Schöps, Jürgen, 13509 Berlin (DE)

(57) **Zusammenfassung**

Um die Montage von Scheibenisolatoren (7,7a,7c,8c,9c) mit einer symmetrischen Außenkontur zu vereinfachen, ist an dem Scheibenisolator (7,7a,7c,8c,9c) eine die Außenkontur durchbrechende Anformung (15,15a,15c,19c,20c) angeordnet. Die Anformung (15,15a,15c,19c,20c) ermöglichen eine vereinfachte Montage des eine symmetrische Außenkontur aufweisenden Scheibenisolators (7,7a,7c,8c,9c) in einer konstruktiv vorgegebenen Lage des Scheibenisolators (7,7a,7c,8c,9c).

## Beschreibung

Die Erfindung bezieht sich auf einen Scheibenisolator mit einer symmetrischen Außenkontur, welche von einem mechanisch stabilisierenden Rahmen umgeben ist, für eine Hochspannungs- oder Mittelspannungsanlage.

Ein derartiger Scheibenisolator ist beispielsweise aus der deutschen Patentschrift DE 198 55 016 C1 bekannt. Der dortige Scheibenisolator ist für die Anwendung in gasisolierten Schaltanlagen oder Rohrleitern vorgesehen. Bei gasisolierten Schaltanlagen sowie gasisolierten Rohrleitern ist es üblich, benachbarte Kapselungsgehäuse in der Weise miteinander zu verbinden, dass ein Scheibenisolator im Bereich einer die beiden Kapselungsgehäuse koppelnden Flanschverbindung angeordnet ist. Dabei ist es bekannt, den Scheibenisolator mit einem mechanisch stabilisierenden Rahmen zu umgeben. Der Scheibenisolator fixiert einen elektrischen Leiter im Innern der Kapselungsgehäuse.

Bei dem bekannten Scheibenisolator ist eine Fixierung bezüglich dessen Rahmens durch ein Verpressen mittels Dichtungsringen zwischen den Flanschen vorgeschlagen.

Der von dem Scheibenisolator gehaltene elektrische Leiter ist in einer definierten Einbaulage innerhalb der Kapselungsgehäuse anzuordnen. Nur bei einem definierten Einbau ist es sichergestellt, dass zum Ankoppeln von weiteren Leiterabschnitten an den von dem Scheibenisolator gehaltenen elektrischen Leiter die entsprechend vorzusehende Lage der einzelnen Leiterstücke zueinander erzielt wird. So ist es notwendig, dass beispielsweise zur Verbindung vorgesehene Ausnehmungen oder Aussparungen bzw. Bohrlöcher oder Verbindungsbolzen in einer montierbaren Lage zueinander angeordnet sind. Bei der aus dem Stand der Technik bekannten Anordnung ist der Scheibenisolator aufgrund der symmetrischen Außenkontur in einer großen Anzahl von Positionen des Scheibenisolators bezüglich des zugeordneten Rahmens sowie bezüglich der Kapselungsgehäuse montierbar.

Der vorliegenden Erfindung liegt die Aufgabe zugrunde, einen Scheibenisolator der eingangs genannten Art so auszubilden, dass eine vereinfachte Montage des Scheibenisolators ermöglicht wird.

Die Aufgabe wird bei einem Scheibenisolator der eingangs genannten Art erfindungsgemäß dadurch gelöst, dass wenigstens eine die Außenkontur durchbrechende Anformung an dem Scheibenisolator angeordnet ist.

Mittels der Anformung ist es während der Montage sehr einfach möglich, die aktuelle Lage eines Scheibenisolators zu erfassen und den Scheibenisolator in einer vorbestimmten Lage relativ zu dem Rahmen in diesen einzufügen. In dieser Weise ist es leicht ermöglicht, den oder die fest mit dem Scheibenisolator verbundenen elektrischen Leiter in ihrer bestimmungsgemäßen Lage zu montieren, so dass die Anschlusspunkte, wie konstruktiv vorgesehen, mit weiteren Leiterabschnitten in einfacher Art miteinander verbunden werden. Aufwendige Positionier- und Justagearbeiten sind so vermieden. Damit wird die Montage des Scheibenisolators in dem mechanisch stabilisierenden Rahmen vereinfacht und zeitlich reduziert.

Weiterhin kann vorteilhaft vorgesehen sein, dass die symmetrische Außenkontur eine kreisförmige oder eine polygonale oder eine ovale Außenkontur ist.

Derartig geformte Außenkonturen sind fertigungstechnisch leicht herstellbar und gestatten es, einen kompakten Scheibenisolator zu gestalten, welcher in einem geringen Umfang dielektrisch belastet ist. Ausgehend von derartig symmetrischen Außenkonturen ist es beispielsweise möglich, Scheibenisolatoren als Schottisolatoren, welche zwischen zwei Gasräumen einer druckgasisolierten Schaltanlage angeordnet sind, auszugestalten. Dabei kann der Scheibenisolator beispielsweise eine ebene Gestalt, eine trichterförmige oder eine andere Gestaltung aufweisen, welche den Kriechweg entlang der Oberfläche ausgehend von dem hindurchgeführten elektrischen Leiter zu den Randabschnitten verlängert.

Eine weitere vorteilhafte Ausgestaltung kann vorsehen, dass die Anformung an einer Umfangsfläche des Scheibenisolators angeordnet ist.

Die Anordnung der Anformung an einer Umfangsfläche bewirkt eine geringe Beeinflussung des Isoliervermögens des Scheibenisolators. Der für die Wirksamkeit des Isolators wichtige Kriechweg entlang der Seitenflächen des Scheibenisolators wird so durch die Anformung nicht verändert. Weiterhin ist eine Anformung an einem Umfangsbereich fertigungstechnisch leicht herstellbar, da der Isolator an sich in seiner Isolationsfestigkeit nicht gestört ist. Aus diesem Grunde ist eine derartige Anformung auch an bereits konstruktiv ausgelegten Scheibenisolatoren leicht nachrüstbar.

Eine weitere vorteilhafte Ausgestaltung kann vorsehen, dass die Anformung bezüglich des Scheibenisolators radial nach außen gerichtet ist.

Die Ausrichtung der Anformung radial nach außen fügt sich in die symmetrische Außenkontur des Scheibenisolators ein und ist bei einer Fertigung des Scheibenisolators leicht herstellbar. Die Übergänge von der die Anformung tragenden Fläche zu der Anformung selbst sind durch die radiale Ausrichtung frei zugänglich und damit leicht zu bearbeiten, wodurch die Fertigung des Scheibenisolators gegenüber bekannten Ausführungsformen nur in einem geringen Umfang aufwändiger ist.

Vorteilhaft kann vorgesehen sein, dass die Anformung ein stiftförmiger Vorsprung ist.

Die stiftförmige Ausgestaltung der Anformung stellt eine mechanisch stabile Gestaltung dar, welche mit einfachen Mitteln an den Scheibenisolator anzuformen ist. Das im Verhältnis zum Scheibenisolator kleine Volumen eines stiftförmigen Vorsprunges ist gegenüber Wärmedehnungen nur in einem geringen Maß anfällig. Somit sind die Maße des Vorsprunges unabhängig von Temperaturschwankungen relativ konstant. Derartige Temperaturschwankungen können beispielsweise bei der Herstellung eines Scheibenisolators auftreten.

Vorteilhafterweise kann weiterhin vorgesehen sein, dass die Anformung in eine Ausnehmung des stabilisierenden Rahmens hineinragt.

Bei einer derartigen Ausgestaltung kann die Anformung in günstiger Art und Weise durch den mechanisch stabilisierenden Rahmen sowohl mechanisch geschützt sein als auch bei einer entsprechenden Ausgestaltung des Rahmens beispielsweise aus einem Metall dielektrisch geschirmt werden. Neben der eindeutigen Positionierung des Scheibenisolators ermöglicht die Anformung bei einer hinreichenden mechanischen Stabilität derselben auch eine Verdrehsicherung des Scheibenisolators in dem symmetrischen Rahmen. Ein Verkippen oder Verkanten bzw. Verdrehen des Scheibenisolators bezüglich des Rahmens wird so verhindert.

Bei einem Hineinragen der Anformung in den stabilisierenden Rahmen kann weiterhin vorgesehen sein, dass zwischen den Oberflächen der Anformung und der Ausnehmung Spalte, die zu einer Stirnseite des Scheibenisolators offen sind, ausgebildet sind.

Durch die zu einer Stirnseite des Scheibenisolators offenen Spalte ist es möglich, diese mit einem Gas, beispielsweise mit einem unter erhöhtem Druck stehenden Isoliergas, zu durchspülen. Dadurch ist die dielektrische Festigkeit zwischen den Oberflächen der Anformung und der Ausnehmung verbessert. Die Teilentladungsfestigkeit dieser Anordnung ist erhöht. Sind die Schlitze nur zu einer einzigen Stirnseite des Scheibenisolators hin geöffnet, so kann eine derartige Scheibenisolatoranordnung auch als Schottisolator eingesetzt werden.

Es kann vorgesehen sein, dass der Scheibenisolator einen gießbaren Kunststoff als Isoliermaterial aufweist.

Durch die Verwendung eines gießbaren Kunststoffes sind einfache Fertigungsverfahren, wie beispielsweise Spritz-, Druckgussverfahren oder Vakuumgussverfahren, zur Herstellung des Scheibenisolators einsetzbar. Somit sind diese Scheibenisolatoren in einer beliebig reproduzierbaren Anzahl mit einer hohen Maßhaltigkeit herstellbar. Dabei ist es möglich, die Anformung während des Spritzverfahrens herzustellen.

Bei der Nutzung eines Spritz-, Druckgussverfahrens oder Vakuumgussverfahrens kann vorteilhafterweise vorgesehen sein, dass die Anformung einen Fußpunkt eines Angussrestes aufweist.

Der bei einem Spritz- oder Gussverfahren auftretende Angussrest ist in günstiger Weise an der Anformung anzuordnen. Bei einer geeigneten Auswahl der Lage der Anformung in der Hochspannungs- oder Mittelspannungsanlage kann sich dieser in einem dielektrisch geschirmten Bereich befinden. Dadurch ist es möglich, den Angussrest mit einem mechanisch einfachen Verfahren abzutrennen. Ein zusätzliches Verputzen bzw. Entgraten ist damit nicht mehr erforderlich. In einer besonders einfachen Ausgestaltungsvariante kann die Anformung derart ausgestaltet sein, dass sie selbst ein Angussrest ist.

Im Folgenden wird die Erfindung anhand von Ausführungsbeispielen in einer Zeichnung schematisch gezeigt und nachfolgend näher beschrieben. Dabei zeigt die
- Figur 1: eine Teilansicht einer ersten Ausgestaltungsvariante einer Scheibenisolatoranordnung, die
- Figur 2: eine Ansicht einer Anformung der aus der Figur 1 bekannten ersten Ausgestaltungsvariante einer Scheibenisolatoranordnung, die
- Figur 3: eine zweite Ausgestaltungsvariante einer Scheibenisolatoranordnung mit einem eine polygonale Außenkontur aufweisenden Scheibenisolator, die
- Figur 4: eine dritte Ausgestaltungsvariante einer Scheibenisolatoranordnung mit Scheibenisolatoren mit einer ovalen Außenkontur.

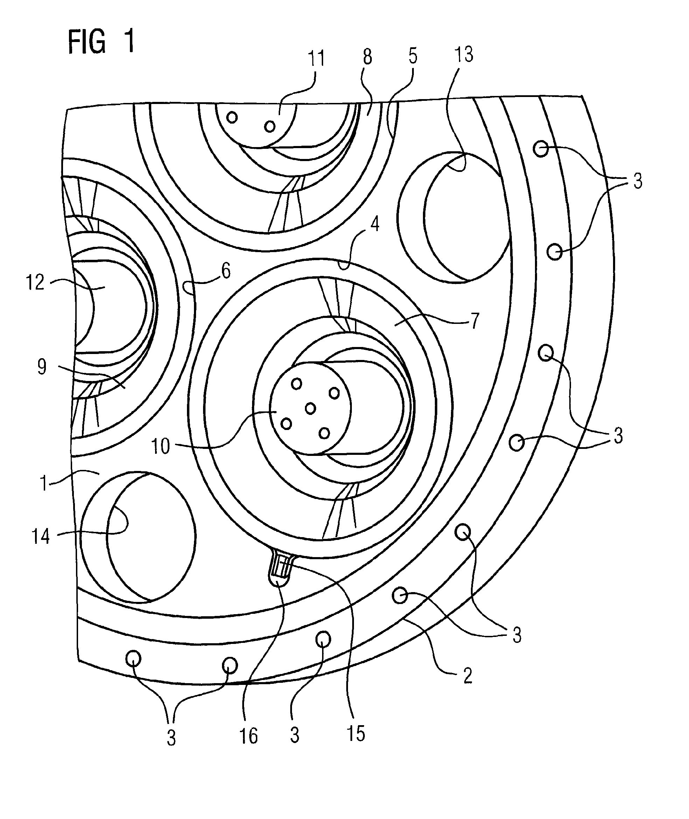

In der Figur 1 ist eine Scheibenisolatoranordnung in einem Ausschnitt dargestellt, wie sie in gasisolierten Schaltanlagen oder in gasisolierten Rohrleitern zum Einsatz gelangt. Derartige gasisolierte Schaltanlagen bzw. gasisolierte Rohrleiter weisen Kapselungsgehäuse auf, in deren Inneren elektrische Leiter geführt sind. Die elektrischen Leiter sind mittels Isolatoren relativ zu den Kapselungsgehäusen beabstandet angeordnet. Das Innere der Kapselungsgehäuse ist mit einem unter erhöhtem Druck stehenden Isoliergas gefüllt. Die Kapselungsgehäuse weisen beispielsweise eine im Wesentlichen rohrförmige Gestalt auf. Die Kapselungsgehäuse sind stirnseitig oder auch mantelseitig mit Öffnungen versehen, an welchen Flansche angeordnet sind. Mit Hilfe dieser Flansche und Befestigungsmitteln wie Schrauben oder Bolzen sind die Kapselungsgehäuse miteinander zu verbinden. Im Bereich derartiger Flanschverbindung ist die in der Figur 1 dargestellte Scheibenisolatoranordnung anzuordnen. Die Scheibenisolatoranordnung der Figur 1 ist derart gestaltet, dass mehrere elektrische Leiter durch mehrere Scheibenisolatoren gehalten sind.

Die Scheibenisolatoranordnung ist im Wesentlichen aus einem mechanisch stabilisierenden Rahmen 1 sowie mehreren Scheibenisolatoren gebildet. Der mechanisch stabilisierende Rahmen 1 weist in seinem Randbereich eine Verdickung 2 auf, in welcher mehrere Durchgangsbohrungen 3 angeordnet sind. Die Verdickung 2 wird zwischen den Flanschen zweier zu verbindender Kapselungsgehäuse eingelegt und die Durchgangsbohrungen 3 werden zum Verspannen der Flanschverbindung mit entsprechenden Befestigungsmitteln durchsetzt.

Der mechanisch stabilisierende Rahmen 1 weist eine erste Öffnung 4, eine zweite Öffnung 5 sowie eine dritte Öffnung 6 auf. In die erste Öffnung 4 ist ein trichterförmiger erster Scheibenisolator 7 eingelegt. In die zweite Öffnung 5 ist ein trichterförmiger zweiter Scheibenisolator 8 eingelegt. Ebenso ist in die dritte Öffnung 6 ein trichterförmiger dritter Scheibenisolator 9 eingelegt. Der erste Scheibenisolator 7 ist von einem ersten Leiterstück 10, der zweite Scheibenisolator 8 ist von einem zweiten Leiterstück 11 und der dritte Scheibenisolator 9 ist von einem dritten Leiterstück 12 durchsetzt. Jeder der drei Scheibenisolatoren 7, 8, 9 weist eine symmetrische Außenkontur auf. Die symmetrische Außenkontur ist eine kreisförmige Außenkontur. Weiterhin ist bei der in der Figur 1 dargestellten Scheibenisolatoranordnung der mechanisch stabilisierende Rahmen 1 mit einer ersten Durchbrechung 13 sowie einer zweiten Durchbrechung 14 ausgestattet. Über die beiden Durchbrechungen 13, 14 ist ein Gasaustausch zwischen den beiden sich rechts und links der Scheibenisolatoranordnung erstreckenden Gasräume der beiden Kapselungsgehäuse ermöglicht. Verzichtet man auf eine Einbringung der beiden Durchbrechungen 13, 14 in den mechanisch stabilisierenden Rahmen 1, so ist bei einer entsprechenden Abdichtung der Scheibenisolatoren 7, 8, 9 in ihren Öffnungen 4, 5, 6 auch eine Trennung der Gasräume voneinander möglich.

Die Ausgestaltung der Scheibenisolatoren 7, 8, 9 soll nunmehr weiter beispielhaft anhand des ersten Scheibenisolators 7 erfolgen. Der erste Scheibenisolator 7 weist an seiner Umfangsfläche eine Anformung 15 auf. Die Anformung 15 ragt in eingelegtem Zustand des ersten Scheibenisolators 7 in die erste Öffnung 4 in eine Ausnehmung 16 des mechanisch stabilisierenden Rahmens 1. Durch das Zusammenwirken der Anformung 15 und der Ausnehmung 16 ist während einer Montage die Lage des ersten Scheibenisolators 7 bezüglich des mechanisch stabilisierenden Rahmens 1 festgelegt und darausfolgend ist ebenso die Lage des ersten Leiterstückes 10 bestimmt. Die stirnseitig an dem ersten Leiterstück 10 angeordneten Befestigungspunkte liegen nunmehr in der konstruktiv vorgesehenen Ausrichtung. Ein stirnseitiges Ankoppeln eines weiteren Leiterstückes an das erste Leiterstück 10 ist so in einfacher Weise ermöglicht. Der Aufwand zur Justage des ersten Scheibenisolators 7 sowie des mit diesem starr verbundenen Leiterstückes 10 ist somit reduziert.

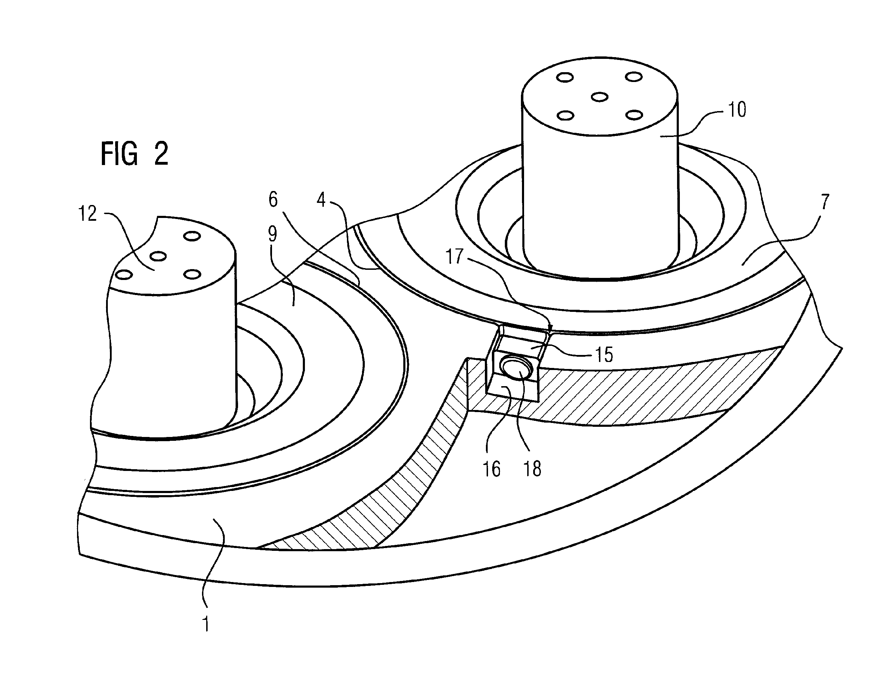

Die Ausgestaltung des ersten Scheibenisolators 7 mit der Anformung 15 sowie der Ausnehmung 16 ist in der Figur 2 in einem Ausschnitt dargestellt. Für eine detaillierte Darstellung ist der mechanisch stabilisierende Rahmen 1 im Bereich der Ausnehmung 16 freigeschnitten. Die Anformung 15 ist auf der Umfangsfläche 17 des ersten Scheibenisolators 7 angeformt. Die Anformung 15 ist bezüglich des ersten Scheibenisolators 7 radial nach außen gerichtet. Sie ist als Stift mit einem rechteckigen Querschnitt ausgestaltet. Stirnseitig ist der Fußpunkt 18 eines Angussrestes erkennbar. Dieser Fußpunkt 18 des Angussrestes ist durch das für die Herstellung des ersten Scheibenisolators 7 angewandte Fertigungsverfahren des Vakuumdruckgusses bedingt. Durch die Anordnung des Angussrestes im Bereich der Ausnehmung 16 ist aufgrund der geeigneten Wahl des Materials für den mechanisch stabilisierenden Rahmen 1, beispielsweise eines Metalls, die Anformung 16 samt Fußpunkt 18 dielektrisch geschirmt. Ein aufwendiges Verputzen des Fußpunktes 18 des Angussrestes ist somit nicht erforderlich. Weiterhin ist aus der Figur 2 erkennbar, dass die Ausnehmung 16 die Wandung des mechanisch stabilisierenden Rahmens 1 nicht vollständig durchdringt. Somit ist eine Verwendung der aus den Figuren 1 und 2 bekannten Anordnung (bei einem Verzicht auf die Durchbrechungen 13, 14) auch als Gasräume voneinander abschottende Scheibenisolatoranordnung möglich. Zwischen der Oberfläche der Anformung 15 und der Ausnehmung 16 sind Spalte gebildet, welche von Isoliergas durchspült sind. Somit ist die Teilentladungsfestigkeit in diesem Bereich verbessert.

Die Erfindung ist jedoch nicht nur auf die in den Figuren 1 und 2 dargestellte Ausgestaltung einer Scheibenisolatoranordnung mit mehreren elektrischen Leitern, die innerhalb eines gemeinsamen Gasraumes angeordnet sind, anzuwenden. Ebenso ist eine erfindungsgemäße Ausgestaltung für Kapselungsgehäuse anzuwenden, welche innerhalb eines Gasraumes jeweils nur einen elektrischen Leiter aufweisen.

Im Folgenden sind technisch gleich wirkende Baugruppen mit den bereits eingeführten Bezugszeichen versehen, welche zusätzliche Indizes aufweisen.

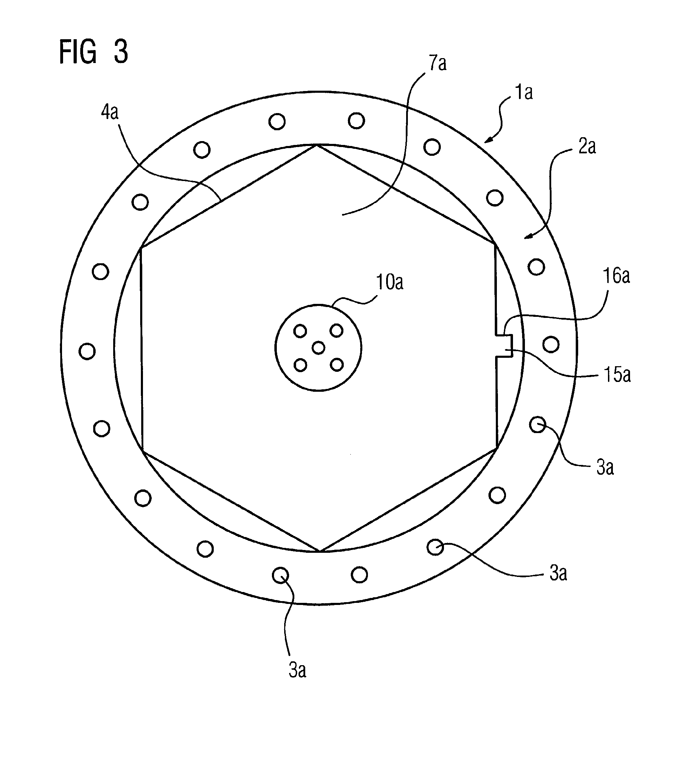

Die Figur 3 zeigt eine Draufsicht einer weiteren Ausgestaltungsvariante einer Scheibenisolatoranordnung. Die in der Figur 3 dargestellte Scheibenisolatoranordnung weist einen mechanisch stabilisierenden Rahmen 1a auf. Der mechanisch stabilisierende Rahmen 1a weist an seinem Umfang eine Verdickung 2a auf. In die Verdickung 2a sind mehrere Durchgangsbohrungen 3a eingebracht. Analog zu der in den Figuren 1 und 2 dargestellten Ausgestaltungsvariante dient die Verdickung 2a der Einpassung und Befestigung der Scheibenisolatoranordnung zwischen den Flanschen zweier zu verbindender Kapselungsgehäuse. Der mechanisch stabilisierende Rahmen 1a weist eine erste Öffnung 4a auf. Die erste Öffnung 4a weist eine polygonale regelmäßig sechseckige Kontur auf. In diese erste Öffnung 4a ist ein erster Scheibenisolator 7a eingelegt. Der erste Scheibenisolator 7a weist eine der ersten Öffnung 4a entsprechende symmetrische polygonale sechseckig gleichmäßige Außenkontur auf. Im Zentrum des ersten Scheibenisolators 7a ist ein erstes Leiterstück 10a angeordnet. An einer der Seiten des ersten Scheibenisolators 7a ist eine Anformung 15a angeordnet. Die Anformung 15a ist vorteilhafterweise an der Umfangsfläche des ersten Scheibenisolators 7a angeordnet. Es kann jedoch auch vorgesehen sein, dass die Anformung auf einer der Scheibenflächen eines Scheibenisolators angeordnet ist. Die Anformung 15a ragt in eine Ausnehmung 16a des stabilisierenden Rahmens 1a.

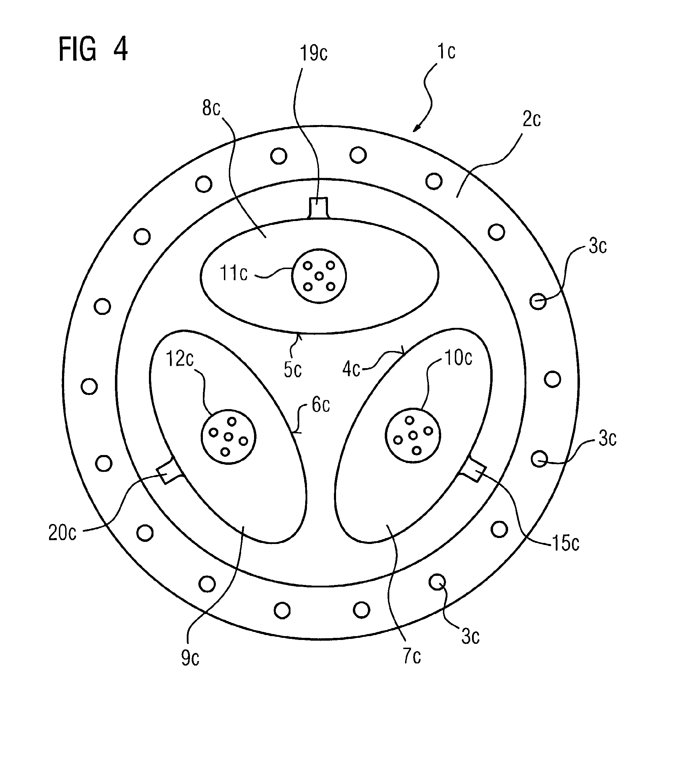

In der Figur 4 ist die Draufsicht einer weiteren Ausgestaltungsvariante einer Scheibenisolatoranordnung dargestellt. Die in der Figur 4 dargestellte Scheibenisolatoranordnung ist für die Verwendung in Schaltanlagen mit mehrphasig gekapselten elektrischen Leitern vorgesehen. Sie entspricht funktional der in den Figuren 1 und 2 dargestellten Ausgestaltungsvariante einer Scheibenisolatoranordnung. Die in der Figur dargestellte Scheibenisolatoranordnung weist einen mechanisch stabilisierenden Rahmen 1c auf. Der mechanisch stabilisierende Rahmen 1c weist eine Verdickung 2c auf. Diese Verdickung dient - wie in den oben beschriebenen Beispielen - der Anordnung der Scheibenisolatoranordnung zwischen den Flanschen zweier zu verbindender Kapselungsgehäuse. Weiterhin sind auf der Verdickung 2c mehrere Durchgangsbohrungen 3c angeordnet. Der mechanisch stabilisierende Rahmen 1c weist eine erste Öffnung 4c, eine zweite Öffnung 5c sowie eine dritte Öffnung 6c auf. Die Öffnungen 4c, 5c, 6c weisen jeweils eine im Wesentlichen ovale Kontur auf. Diesen ovalen Konturen entsprechend weisen ein erster Scheibenisolator 7c, ein zweiter Scheibenisolator 8c sowie ein dritter Scheibenisolator 9c ovale Außenkonturen auf. Um eine um 180° verdrehte fehlerhafte Einlegung des ersten Scheibenisolators 7c, des zweiten Scheibenisolators 8c sowie des dritten Scheibenisolators 9c in die jeweilige erste Öffnung 4c, die zweite Öffnung 5c oder die dritte Öffnung 6c zu verhindern, weist jeder der Scheibenisolatoren 7c, 8c, 9c eine die Außenkontur durchbrechende Anformung 15c, 19c, 20c auf. Die Anformungen 15c, 19c, 20c ragen in die jeweiligen Ausnehmungen des mechanisch stabilisierenden Rahmens 1c. Die mittig in den Scheibenisolatoren 7c, 8c und 9c angeordneten Leiterstücke 10c, 11c, 12c sind in ihrer Lage eindeutig festgelegt.

Neben den in den Figuren gezeigten Ausführungsbeispielen sind auch weitere mit einer symmetrischen Außenkontur versehene Scheibenisolatoren die mit einer die Außenkontur durchbrechenden Anformung ausrüstbar. Weiterhin sind neben den in den Figuren vorgeschlagenen stiftartig radial nach außen verlaufenden Anformungen davon abweichende Gestaltungen vorsehbar. Derartige Gestaltungen wären beispielsweise sägezahnartige Anformungen oder eine kurvenartige Gestalt aufweisende Anformungen.

Eie erfindungsgemäße Lehre ist weiterhin auch auf Scheibenisolatoren anwendbar, die mehrere Leiterstücke positionieren.

## Patentansprüche

1. Scheibenisolator (7,8,9,7a,7c,8c,9c) mit einer symmetrischen Außenkontur, welche von einem mechanisch stabilisierenden Rahmen (1,1a,1c) umgeben ist, für eine Hochspannungs- oder Mittelspannungsanlage,
**dadurch gekennzeichnet, dass**
wenigstens eine die Außenkontur durchbrechende Anformung (15,15a,15c,19c,20c) an dem Scheibenisolator (7,8,9,7c,8c,9c) angeordnet ist.

2. Scheibenisolator (7,8,9,7a,7c,8c,9c) nach Anspruch 1,
**dadurch gekennzeichnet, dass**
die symmetrische Außenkontur eine kreisförmige Außenkontur ist.

3. Scheibenisolator (7,8,9,7a,7c,8c,9c) nach Anspruch 1,
**dadurch gekennzeichnet, dass**
die symmetrische Außenkontur eine polygonale Außenkontur ist.

4. Scheibenisolator (7,8,9,7a,7c,8c,9c) nach Anspruch 1,
**dadurch gekennzeichnet, dass**
die symmetrische Außenkontur eine ovale Außenkontur ist.

5. Scheibenisolator (7,8,9,7a,7c,8c,9c) nach einem der Ansprüche 1 bis 4,
**dadurch gekennzeichnet, dass**
die Anformung (15) an einer Umfangsfläche (17) des Scheibenisolators (7) angeordnet ist.

6. Scheibenisolator (7,8,9,7a,7c,8c,9c) nach einem der Ansprüche 1 bis 5,
**dadurch gekennzeichnet, dass**
die Anformung (15,15a,15c,19c,20c) bezüglich des Scheibenisolators (7,7a,7c,8c,9c) radial nach außen gerichtet ist.

7. Scheibenisolator (7,8,9,7a,7c,8c,9c) nach einem der Ansprüche 1 bis 6,
**dadurch gekennzeichnet, dass**
die Anformung (15) ein stiftförmiger Vorsprung ist.

8. Scheibenisolator (7,8,9,7a,7c,8c,9c) nach einem der Ansprüche 1 bis 7,
**dadurch gekennzeichnet, dass**
die Anformung (15) in eine Ausnehmung (16) des stabilisierenden Rahmens (1) hineinragt.

9. Scheibenisolator (7,8,9,7a,7c,8c,9c) nach Anspruch 8,
**dadurch gekennzeichnet, dass**
zwischen den Oberflächen der Anformung (15) und der Ausnehmung (16) Spalte, die zu einer Stirnseite des Scheibenisolators offen sind, ausgebildet sind.

10. Scheibenisolator (7,8,9,7a,7c,8c,9c) nach einem der Ansprüche 1 bis 9,
**dadurch gekennzeichnet, dass**
der Scheibenisolator (7,8,9,7a,7c,8c,9c) einen gießbaren Kunststoff als Isoliermaterial aufweist.

11. Scheibenisolator (7,8,9,7a,7c,8c,9c) nach Anspruch 10,
**dadurch gekennzeichnet, dass**
die Anformung (15) einen Fußpunkt (18) eines Angussrestes aufweist.
